# EUROPEAN PATENT APPLICATION

(11) **EP 4 279 174 A1**
(43) Date of publication of application: **22.11.2023**
(21) Application number: 23173736.2
(22) Date of filing: 16.05.2023
(51) Int. Cl.: B01J 19/00, B01J 19/24, G01N 25/20

(54) **REACTION ANALYSIS SYSTEM, REACTION ANALYSIS DEVICE, AND REACTION ANALYSIS METHOD**

(30) Priority: 20.05.2022 JP 2022083370
(71) Applicant: Yokogawa Electric Corporation, Tokyo 180-8750 (JP)
(72) Inventor: Manabe, Yuuka, Musashino-shi Tokyo 180-8750 (JP); Ogawa, Jun-ichi, Musashino-shi Tokyo 180-8750 (JP); Imamura, Yusuke, Musashino-shi Tokyo 180-8750 (JP)
(74) Representative: Osha BWB

(57) **Abstract**

A reaction analysis system (1; 1a; 1b) comprises: a first flow path through which a reaction fluid, obtained by mixing reactants in a mixer (13), flows, a second flow path through which the reaction fluid flows and that has higher heat exchange efficiency than the first flow path, a temperature measurer (16) configured to measure a temperature distribution of the reaction fluid along the first flow path, and a reaction analysis device (2)0 configured to specify a reaction state of the reaction fluid based on a reaction parameter. The reaction parameter is obtained from the measured temperature distribution and indicates the reaction state of the reaction fluid.

## Description

### RELATED APPLICATION

The present application claims priority to and the benefit of Japanese Patent Application No. 2022-083370 filed May 20, 2022.

### TECHNICAL FIELD

The present disclosure relates to a reaction analysis system, a reaction analysis device, and a reaction analysis method.

### BACKGROUND ART

As a structure for analyzing the state of a chemical reaction, JP 2021-159910 A (PTL 1) describes a structure for specifying the reaction state of a reaction fluid flowing through a flow reactor. The structure in PTL 1 specifies the reaction state of the reaction fluid based on a reaction parameter that is obtained from the temperature distribution of the reaction fluid in the flow direction of the reaction fluid immediately after the reaction start and indicates the reaction state of the reaction fluid.

### CITATION LIST

### Patent Literature

### PATENT LITERATURE

PTL 1: JP 2021-159910 A

However, when the temperature of the reaction fluid in the flow reactor rises as the chemical reaction proceeds, a side reaction tends to occur. Thus, with the conventional structure, there is a possibility that the reaction fluid whose reaction state is specified is not acquired alone but is mixed with a substance produced by the side reaction. It is therefore difficult to acquire, with high purity, only the substance produced by the desired chemical reaction.

It could therefore be helpful to provide a reaction analysis system, a reaction analysis device, and a reaction analysis method that can specify the reaction state of a desired chemical reaction and acquire a substance produced by the chemical reaction with higher purity.

### SUMMARY

A reaction analysis system according to one or more embodiments of the present disclosure comprises: a first flow path through which a reaction fluid obtained by mixing a plurality of reactants flows; a second flow path through which the reaction fluid flows and that has higher heat exchange efficiency than the first flow path; a temperature measurer configured to measure a temperature distribution of the reaction fluid along the first flow path; and a reaction analysis device configured to specify a reaction state of the reaction fluid, based on a reaction parameter. The reaction parameter is obtained from the measured temperature distribution and indicates the reaction state of the reaction fluid.

In this way, the reaction analysis system specifies the reaction state based on the reaction parameter obtained from the temperature distribution measured in the first flow path lower in heat exchange efficiency than the second flow path. The reaction analysis system can therefore acquire the useful reaction parameter from the temperature distribution of the reaction fluid and specify the reaction state of the reaction fluid based on the reaction parameter with high accuracy. Moreover, since the reaction analysis system includes the second flow path higher in heat exchange efficiency than the first flow path, temperature rise can be prevented to suppress any side reaction. Thus, the reaction analysis system can specify the reaction state of the desired chemical reaction and acquire the substance produced by the chemical reaction with higher purity.

According to one or more embodiments, the reaction fluid may be obtained by mixing the plurality of reactants in a mixer. Accordingly, a reaction analysis system according to one or more embodiments of the present disclosure comprises: a first flow path through which a reaction fluid obtained by mixing a plurality of reactants in a mixer flows; a second flow path through which the reaction fluid obtained in the mixer flows and that is higher in heat exchange efficiency than the first flow path; a temperature measurer configured to measure a temperature distribution of the reaction fluid along the first flow path; and a reaction analysis device configured to specify a reaction state of the reaction fluid, based on a reaction parameter obtained from the temperature distribution measured by the temperature measurer and indicating the reaction state of the reaction fluid.

According to one or more embodiments, the reaction analysis device of the reaction analysis system may be defined as in any one of the embodiments described herein, including the embodiment of claim 7.

The reaction analysis system according to one or more embodiments further comprises a temperature adjustor configured to adjust a temperature of each of the first flow path and the second flow path. Thus, the reaction analysis system can optimize the temperature as a reaction condition under which the desired chemical reaction can be carried out.

The reaction analysis system according to one or more embodiments further comprises: a fluid tank configured to immerse at least one of the first flow path and the second flow path in a temperature control fluid; and a pump configured to feed the temperature control fluid into the fluid tank from outside. Thus, the reaction analysis system can adjust the heat exchange efficiency of at least one of the first flow path and the second flow path by adjusting the inflow and outflow of the temperature control fluid in the fluid tank.

In the reaction analysis system according to one or more embodiments, the temperature measurer is configured to further measure a temperature distribution of the reaction fluid along the second flow path. Thus, the reaction analysis system can specify not only the reaction state of the reaction fluid along the first flow path but also the reaction state of the reaction fluid along the second flow path.

The reaction analysis system according to one or more embodiments further comprises a valve configured to switch connection with a discharge port of the mixer between the first flow path and the second flow path. Thus, by specifying the reaction condition under which the desired chemical reaction can be carried out based on the reaction state according to the temperature distribution of the reaction fluid along the first flow path and causing the chemical reaction under the condition, the reaction analysis system can acquire the desired substance from the second flow path with high purity.

The reaction analysis system according to one or more embodiments further comprises: a third flow path through which the reaction fluid obtained in the mixer flows and that is higher in heat exchange efficiency than the second flow path; and a valve configured to switch connection with a discharge port of the mixer among the first flow path, the second flow path, and the third flow path, wherein the temperature measurer is configured to further measure a temperature distribution of the reaction fluid along each of the second flow path and the third flow path, and the reaction analysis device is configured to further specify a reaction state of the reaction fluid in each of the second flow path and the third flow path, based on a reaction parameter obtained from the temperature distribution along a corresponding one of the second flow path and the third flow path measured by the temperature measurer. Thus, the reaction analysis system can select the optimum flow path from among the first flow path, the second flow path, and the third flow path, and cause the chemical reaction in the flow path. For example, by selecting a flow path whose heat exchange efficiency is low enough to cause no side reaction and high enough to allow the reaction state to be specified, the reaction analysis system can specify the reaction state of the desired chemical reaction and acquire the substance produced by the chemical reaction with high purity.

A reaction analysis device according to some embodiments comprises a controller configured to: acquire a measured value of a temperature distribution of a reaction fluid obtained by mixing a plurality of reactants in a mixer, along a first flow path through which the reaction fluid flows; specify a reaction state of the reaction fluid, based on a reaction parameter obtained from the measured value of the temperature distribution and indicating the reaction state of the reaction fluid; and control a valve to switch connection with a discharge port of the mixer from the first flow path to a second flow path higher in heat exchange efficiency than the first flow path.

In this way, the reaction analysis device specifies the reaction state based on the reaction parameter obtained from the temperature distribution measured in the first flow path lower in heat exchange efficiency than the second flow path. The reaction analysis device can therefore acquire the useful reaction parameter from the temperature distribution of the reaction fluid and specify the reaction state of the reaction fluid based on the reaction parameter with high accuracy. Moreover, the reaction analysis device controls the valve to switch the connection with the discharge port of the mixer from the first flow path to the second flow path higher in heat exchange efficiency. Thus, the reaction analysis device can suppress any side reaction and acquire the substance produced by the desired chemical reaction with higher purity.

A reaction analysis method according to some embodiments is a reaction analysis method carried out by a controller in a reaction analysis device, the reaction analysis method comprising: acquiring a measured value of a temperature distribution of a reaction fluid obtained by mixing a plurality of reactants in a mixer, along a first flow path through which the reaction fluid flows; specifying a reaction state of the reaction fluid, based on a reaction parameter obtained from the measured value of the temperature distribution and indicating the reaction state of the reaction fluid; and controlling a valve to switch connection with a discharge port of the mixer from the first flow path to a second flow path higher in heat exchange efficiency than the first flow path.

In this way, the reaction analysis method specifies the reaction state based on the reaction parameter obtained from the temperature distribution measured in the first flow path lower in heat exchange efficiency than the second flow path. The reaction analysis method can therefore acquire the useful reaction parameter from the temperature distribution of the reaction fluid and specify the reaction state of the reaction fluid based on the reaction parameter with high accuracy. Moreover, the reaction analysis method controls the valve to switch the connection with the discharge port of the mixer from the first flow path to the second flow path higher in heat exchange efficiency. Thus, the reaction analysis method can suppress any side reaction and acquire the substance produced by the desired chemical reaction with higher purity.

It is thus possible to specify the reaction state of a desired chemical reaction and acquire a substance produced by the chemical reaction with higher purity.

### BRIEF DESCRIPTION OF THE DRAWINGS

In the accompanying drawings:
FIG. 1 is a block diagram illustrating the structure of a reaction analysis system according to a comparative example;
FIG. 2 is a block diagram illustrating an example of the structure of a reaction analysis system according to one or more embodiments;
FIG. 3 is a block diagram illustrating an example of the structure of a reaction analysis device according to one or more embodiments;
FIG. 4 is a flowchart illustrating an example of the procedure of a reaction analysis method according to one or more embodiments; and
FIG. 5 is a block diagram illustrating an example of the structure of a reaction analysis system according to one or more embodiments. embodiment.

### DETAILED DESCRIPTION

### <Comparative Example>

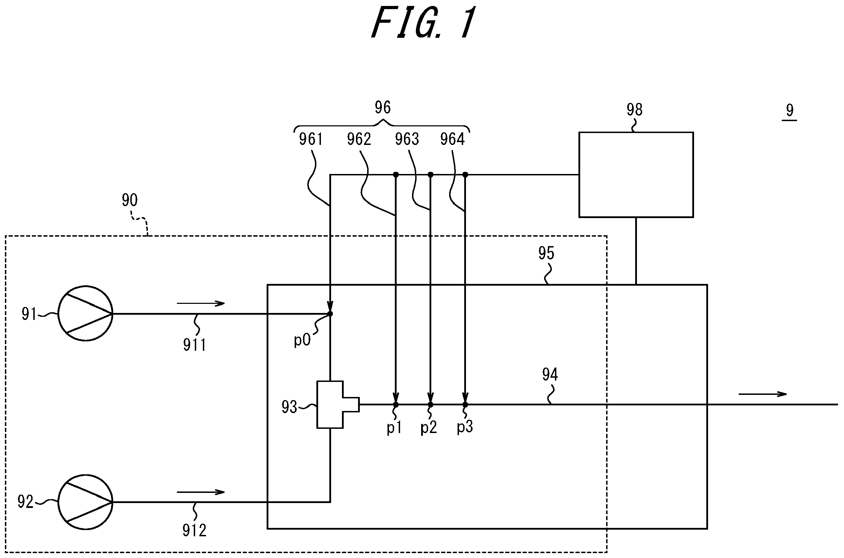

FIG. 1 is a block diagram illustrating the structure of a reaction analysis system 9 according to a comparative example. The reaction analysis system 9 includes a flow reactor 90, a temperature adjustor 95, a temperature measurer 96, and a reaction analysis device 98.

The flow reactor 90 is a flow path that supplies reactants subjected to a chemical reaction and causes the chemical reaction. The flow reactor 90 includes pumps 91 and 92, feed tubes 911 and 912, a mixer 93, and a reaction tube 94. The pump 91 is connected to a first introduction port of the mixer 93 via the feed tube 911. The pump 92 is connected to a second introduction port of the mixer 93 via the feed tube 912. The mixer 93 includes two introduction ports and one discharge port. The discharge port of the mixer 93 is connected to the reaction tube 94 through which a reaction fluid obtained by mixing a plurality of reactants flows. In this structure, the pump 91 feeds a first reactant to the reaction tube 94 via the feed tube 911. The pump 92 feeds a second reactant to the reaction tube 94 via the feed tube 912. The first reactant and the second reactant are mixed in the mixer 93, and the chemical reaction starts. The mixture of the first and second reactants flows through the reaction tube 94, during which the chemical reaction proceeds.

The temperature adjustor 95 adjusts the temperature of the mixer 93 and the reaction tube 94 to a predetermined temperature under control of the reaction analysis device 98.

The temperature measurer 96 is a device that measures the temperature of each of the reactant and the reaction fluid. The temperature measurer 96 includes temperature sensors 961 to 964 that measure the temperatures at a plurality of positions p0 to p3 in the feed tube 911 and the reaction tube 94.

The reaction analysis device 98 controls the operations of the pumps 91 and 92, the temperature adjustor 95, etc. The reaction analysis device 98 also acquires a reaction parameter from the temperature distribution of the reaction fluid measured by the temperature measurer 96, and specifies the reaction state of the reaction fluid based on the reaction parameter.

In the structure of the comparative example described above, when the temperature of the reaction fluid in the flow reactor 90 rises, a side reaction tends to occur. Hence, in the reaction tube 94, the reaction fluid whose reaction state is specified is not obtained alone but is mixed with a substance produced by the side reaction. It is therefore difficult to obtain, with high purity, only the substance produced by the desired chemical reaction. This might be overcome by forming the reaction tube 94 of a material that facilitates heat exchange to prevent the temperature rise of the reaction fluid. However, in the case where the reaction tube 94 facilitates heat exchange, the side reactions is suppressed but the temperature of the reaction fluid is hard to rise, making it difficult to measure the temperature distribution due to reaction heat. Consequently, it is difficult to acquire the reaction parameter from the temperature distribution of the reaction fluid and specify the reaction state of the reaction fluid based on the reaction parameter with high accuracy.

It could therefore be helpful to enable specifying the reaction state of a desired chemical reaction and acquiring a substance produced by the chemical reaction with higher purity.

### <Embodiment 1>

Embodiments of the present disclosure will be described below, with reference to the drawings. In the drawings, parts having the same structures or functions are given the same reference signs. In the description of this embodiment, the description of the same parts may be omitted or simplified as appropriate.

A reaction analysis system according to the present disclosure selectively uses two reaction tubes different in heat exchange efficiency, to suppress any side reaction while measuring temperature changes due to reaction heat. That is, the reaction analysis system according to the present disclosure measures a reaction fluid in a flow path of a flow reactor using a temperature sensor, and performs reaction analysis from the temperature distribution of the reaction fluid. The reaction analysis system also includes a mechanism for switching between flow paths according to the desired chemical reaction and the purpose of temperature measurement. In the reaction analysis system, heat exchange is hindered in one flow path, thus making it easier to measure temperature changes due to reaction heat. Meanwhile, heat exchange is facilitated in the other flow path, thus suppressing the temperature rise of the reaction fluid and suppressing any side reaction. With such a structure according to the present disclosure, it is possible to specify the reaction state of the desired chemical reaction and acquire the substance produced by the chemical reaction with higher purity.

### (Reaction Analysis System)

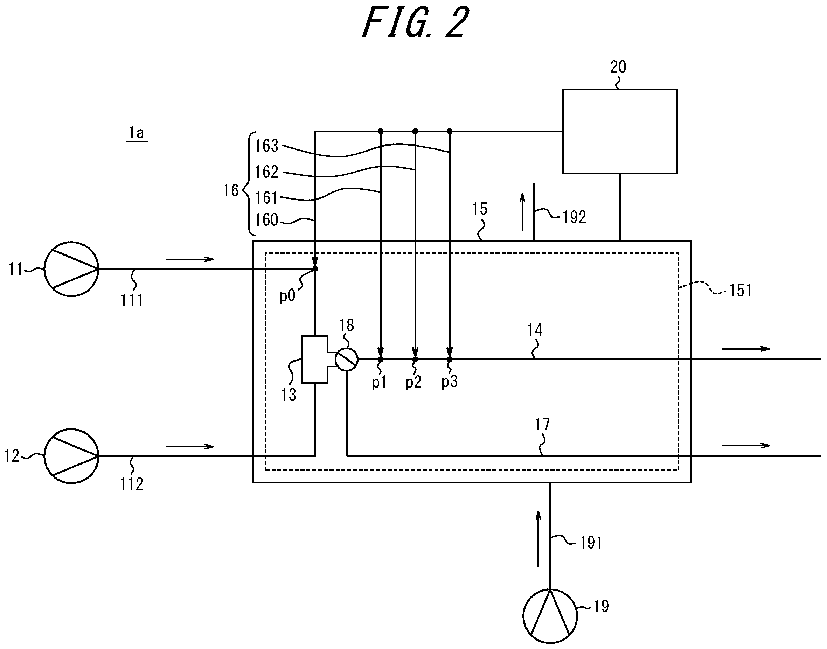

FIG. 2 is a block diagram illustrating an example of the structure of a reaction analysis system 1a according to one or more embodiments. The reaction analysis system 1a includes pumps 11 and 12, feed tubes 111 and 112, a mixer 13, reaction tubes 14 and 17, a temperature adjustor 15, a fluid tank 151, a temperature measurer 16, a valve 18, a pump 19, an inflow tube 191, a discharge tube 192, and a reaction analysis device 20.

The pump 11 and the feed tube 111 and the pump 12 and the feed tube 112 form a plurality of supply flow paths for supplying a plurality of reactants to be subjected to a chemical reaction. The mixer 13 is connected to the plurality of supply flow paths, and mixes the plurality of reactants. The pump 11 is connected to a first introduction port of the mixer 13 via the feed tube 111. The pump 12 is connected to a second introduction port of the mixer 13 via the feed tube 112. In the example in FIG. 2, the mixer 13 includes two introduction ports and one discharge port. The reaction analysis system 1a may include three or more feed tubes, and the mixer 13 may be connected to the three or more supply flow paths and mix three or more types of reactants.

In this embodiment, the plurality of reactants supplied from the feed tubes 111 and 112 and the reaction fluid fed from the mixer 13 to the reaction tubes 14 and 17 are each a liquid, a gas, a liquid-gas mixture, or a mixture of any of these with a trace amount of a solid.

The reaction analysis system 1a includes the valve 18 at the discharge port of the mixer 13. The valve 18 is connected to the reaction tube 14 as a first flow path and the reaction tube 17 as a second flow path. The valve 18 switches the flow path through which the reaction fluid obtained by mixing the plurality of reactants in the mixer 13 flows, between the reaction tube 14 and the reaction tube 17. In such a structure, the pump 11 feeds a first reactant to the mixer 13 via the feed tube 111. The pump 12 feeds a second reactant to the mixer 13 via the feed tube 112. The first reactant and the second reactant are mixed in the mixer 13, and the chemical reaction starts. The mixture of the first and second reactants flows through the reaction tube 14 or 17 depending on the state of the valve 18, during which the chemical reaction proceeds. Although the valve 18 switches the flow path to which the plurality of reactants mixed in the mixer 13 are discharged between two reaction tubes (the reaction tubes 14 and 17) in this embodiment, the valve 18 switches the flow path among three or more reaction tubes. The reaction tube 17 forms a flow path higher in heat exchange efficiency than the reaction tube 14. For example, the reaction tube 17 is made of a material having higher heat exchange efficiency than that of the reaction tube 14.

The temperature measurer 16 is a device that measures the temperature of each of the reactant and the reaction fluid. In the example in FIG. 2, the temperature measurer 16 includes a plurality of temperature sensors 160 to 163 arranged along the flow path before and after the mixer 13. For example, the temperature sensor 160 is installed on the input side of the mixer 13, such as position p0 in the feed tube 111. The temperature sensor 160 can measure or estimate the initial temperature of the reaction fluid obtained by mixing the plurality of reactants (i.e. the temperature of the reaction fluid at the discharge port of the mixer 13).

The temperature sensors 161 to 163 are installed on one of the output sides of the mixer 13, such as positions p1 to p3 in the reaction tube 14. The temperature sensors 161 to 163 can measure the temperature (temperature distribution) of the reaction fluid immediately after the mixing (i.e. immediately after the start of the reaction) in the flow direction of the reaction fluid. The term "immediately after the start of the reaction" does not mean immediately after the reaction fluid actually starts reacting, but means immediately after the reaction fluid is put in a state in which the reaction starts (for example, immediately after the plurality of reactants are mixed). Although the temperature measurer 16 includes four temperature sensors 160 to 163 in FIG. 2, the number of temperature sensors included in the temperature measurer 16 may be three or less or five or more.

The temperature adjustor 15 adjusts the temperature of the mixer 13 and the reaction tubes 14 and 17 to a predetermined temperature under control of the reaction analysis device 20. For example, the temperature adjustor 15 may include a heater or a cooler. The feed tubes 111 and 112, the mixer 13, and the reaction tubes 14 and 17 are installed inside the temperature adjustor 15. In the fluid tank 151 inside the temperature adjustor 15, the reaction tubes 14 and 17 may be immersed in a temperature control fluid, which is a fluid for temperature adjustment. Such a temperature control fluid may be, for example, a liquid, a gas, a liquid-gas mixture, or a mixture of any of these with a trace amount of a solid.

The pump 19 is a pump that feeds the temperature control fluid from the outside of the temperature adjustor 15 to the fluid tank 151 inside via the inflow tube 191. The temperature control fluid fed to the fluid tank 151 is discharged to the outside of the temperature adjustor 15 via the discharge tube 192. The inflow tube 191 and the discharge tube 192 may be connected to circulate the temperature control fluid moving inside the temperature adjustor 15. The pump 19 can adjust the amount per unit time of the temperature control fluid flowing into the temperature adjustor 15 from outside. If the amount of the temperature control fluid flowing into the temperature adjustor 15 is large, heat exchange in the reaction tubes 14 and 17 is promoted. Since the reaction tube 17 is higher in heat exchange efficiency than the reaction tube 14 as mentioned above, if the inflow and outflow of the temperature control fluid are large, heat exchange in the reaction tube 17 proceeds more than that in the reaction tube 14. Hence, by adjusting the inflow and outflow of the temperature control fluid by the pump 19, the heat exchange in the reaction tubes 14 and 17 can be finely adjusted.

Although the reaction tubes 14 and 17 are immersed in the temperature control fluid in the same fluid tank 151 in the temperature adjustor 15 in this embodiment, a fluid tank for immersing the reaction tube 14 in a temperature control fluid and a fluid tank for immersing the reaction tube 17 in a temperature control fluid may be separate. In this case, the type of temperature control fluid used for immersion may be different for each of the reaction tubes 14 and 17 (i.e. for each fluid tank). For example, the temperature control fluid in which the reaction tube 17 is immersed may be made of a material having higher heat exchange efficiency than the temperature control fluid in which the reaction tube 14 is immersed. Alternatively, the pump 19 for feeding the temperature control fluid may be provided for each of the reaction tubes 14 and 17 (i.e. for each fluid tank), and the speed of the pump 19 may be adjusted for each of the reaction tubes 14 and 17. The reaction analysis system 1a may include a stirrer for stirring the temperature control fluid in the fluid tank 151, instead of or together with the pump 19. The stirrer may be, for example, a stirring blade including a plurality of blade portions. When the number of rotations of such a stirrer is high, heat exchange between the temperature control fluid and the reaction tubes 14 and 17 is promoted. Hence, by adjusting the number of rotations of the stirrer, the reaction analysis system 1a can finely adjust the heat exchange in the reaction tubes 14 and 17.

The reaction analysis device 20 controls the operations of the pumps 11, 12, and 19, the temperature adjustor 15, etc. The reaction analysis device 20 also acquires a reaction parameter (or reaction parameters, hereafter the same) from the temperature distribution of the reaction fluid measured by the temperature measurer 16, and specifies the reaction state of the reaction fluid based on the reaction parameter. The reaction analysis device 20 according to this embodiment is composed of a dedicated information processing device. Alternatively, the reaction analysis device 20 may be composed of a general-purpose information processing device such as a personal computer (PC) or a workstation (WS).

The reaction parameter herein is a parameter indicating the reaction state of the reaction fluid. Examples of the reaction parameter include a first reaction parameter relating to the peak value of the temperature distribution of the reaction fluid immediately after the start of the reaction, and a second reaction parameter relating to the peak position of the temperature distribution of the reaction fluid immediately after the start of the reaction. Specifically, for example, the first reaction parameter may be reaction molar enthalpy (kJ/mol) indicating the amount of heat generated per unit amount of substance. For example, the second reaction parameter may be activation free energy (kJ/mol). The activation free energy is the difference between the free energy before the reaction and the free energy in the reaction transition state, and indicates the temperature dependence of the reaction rate. Based on such a reaction parameter, the reaction analysis device 20 may calculate at least one of the reaction rate of the reaction fluid, the concentrations of the plurality of reactants, and the concentration or yield of the product contained in the reaction fluid, as the reaction state of the reaction fluid. For the reaction parameters and the reaction states, the same values as described in PTL 1 may be used, for example.

As described above, the reaction analysis system 1a includes the reaction tubes 14 and 17 different in heat exchange efficiency, as the flow paths through which the reaction fluid obtained by mixing the plurality of reactants flows. By measuring the temperature distribution of the reaction fluid along the reaction tube 14 lower in heat exchange efficiency, the reaction analysis device 20 can specify the reaction state of the reaction fluid with high accuracy. Since the reaction analysis system 1a also includes the reaction tube 17 higher in heat exchange efficiency and smaller in temperature rise width by the chemical reaction than the reaction tube 14, the substance produced by the desired chemical reaction can be obtained with higher purity while suppressing any side reaction.

### (Reaction Analysis Device)

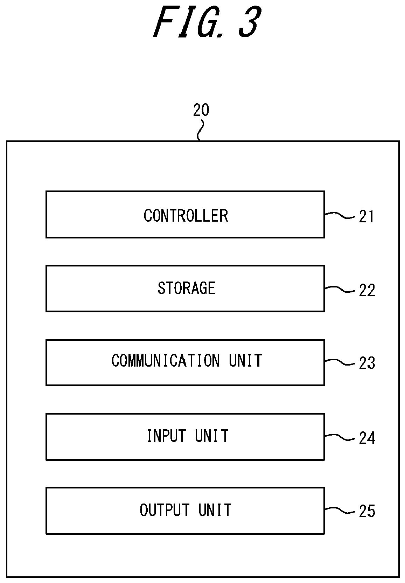

FIG. 3 is a block diagram illustrating an example of the structure of the reaction analysis device 20 according to one or more embodiments. As illustrated in FIG. 3, the reaction analysis device 20 includes a controller 21, a storage 22, a communication unit 23, an input unit 24, and an output unit 25.

The controller 21 includes one or more processors. In one or more embodiments, the term "processor" refers to, but is not limited to, a general-purpose processor or a dedicated processor specialized for a specific process. The controller 21 is communicably connected to each component in the reaction analysis device 20, and controls the overall operation of the reaction analysis device 20.

The storage 22 includes any storage module such as a hard disk drive (HDD), a solid state drive (SSD), read-only memory (ROM), and random access memory (RAM). For example, the storage 22 may function as main memory, auxiliary memory, or cache memory. The storage 22 stores any information used for the operation of the reaction analysis device 20. For example, the storage 22 may store a system program, application programs, temperature distributions measured by the temperature measurer 16, reaction parameters obtained from the temperature distributions, various information received by the communication unit 23, and the like.

The communication unit 23 includes any communication module capable of connecting and communicating with other devices such as the pumps 11, 12, and 19, the temperature measurer 16, and the valve 18, by any communication technology. The communication unit 23 may further include a communication control module for controlling communication with other devices, and a storage module for storing communication data such as identification information required for communication with other devices.

The input unit 24 includes one or more input interfaces for receiving input operations by a user and acquiring input information based on the user operations. Non-limiting examples of the input unit 24 include physical keys and a pointing device. The reaction analysis device 20 may not include the input unit 24.

The output unit 25 includes one or more output interfaces for outputting information to the user and notifying the user. Non-limiting examples of the output unit 25 include a display that outputs information as images and a speaker that outputs information as sound. At least one of the input unit 24 and the output unit 25 may be integrated with the reaction analysis device 20 or provided separately from the reaction analysis device 20. The reaction analysis device 20 may not include the output unit 25.

The functions of the reaction analysis device 20 may be implemented by a processor included in the controller 21 executing a computer program (program) according to this example. That is, the functions of the reaction analysis device 20 may be implemented by software. The computer program causes a computer to execute the processes of the steps included in the operation of the reaction analysis device 20, thereby causing the computer to implement the functions corresponding to the processes of the steps. The computer program is thus a program for causing the computer to function as the reaction analysis device 20 according to this example.

Part or all of the functions of the reaction analysis device 20 may be implemented by a dedicated circuit included in the controller 21. That is, part or all of the functions of the reaction analysis device 20 may be implemented by hardware. The reaction analysis device 20 may be implemented by a single information processing device, or implemented by a plurality of information processing devices in cooperation with each other.

### (Reaction Analysis Method)

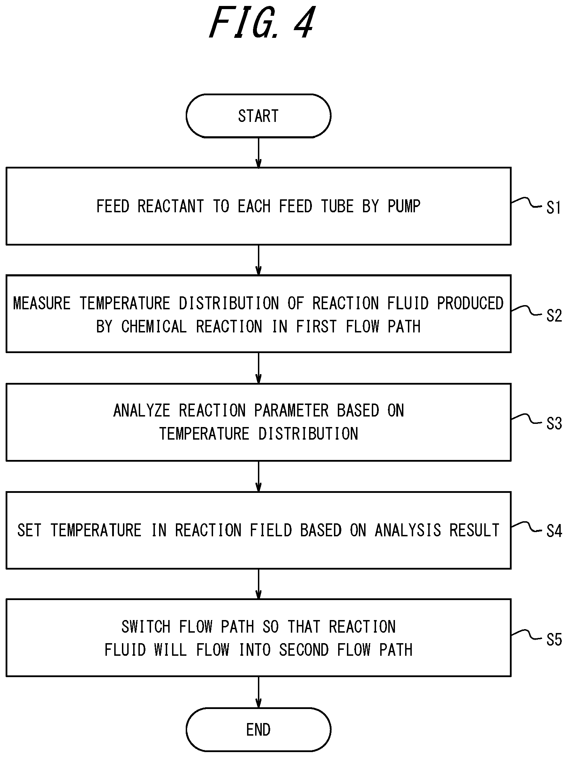

FIG. 4 is a flowchart illustrating an example of the procedure of a reaction analysis method according to one or more embodiments. The operation of the reaction analysis device 20 described below with reference to FIG. 4 may correspond to at least part of the reaction analysis method according to this example. Each step in FIG. 4 is executed under control of the controller 21 in the reaction analysis device 20. The following process starts in a state in which the valve 18 is set so that the reaction fluid mixed in the mixer 13 will flow into the reaction tube 14.

In step S1, the controller 21 controls the pump 11 to feed the first reactant to the feed tube 111. Concurrently, the controller 21 controls the pump 12 to feed the second reactant to the feed tube 112. As a result, the reactants fed from the feed tubes 111 and 112 are mixed in the mixer 13, and a chemical reaction starts. The reaction fluid mixed in the mixer 13 flows into the reaction tube 14 via the valve 18.

In step S2, the controller 21 measures the respective temperatures at the position p0 on the input side of the mixer 13 and the plurality of positions p1 to p3 in the reaction tube 14 as the first flow path, by the temperature measurer 16. The temperature measurer 16 outputs the measured temperatures at the positions p0 to p3 to the reaction analysis device 20. The controller 21 in the reaction analysis device 20 acquires the measured temperatures at the positions p0 to p3.

In step S3, the controller 21 analyzes a reaction parameter based on the temperature distribution in the flow path (reaction tube 14) measured in step S2.

In step S4, the controller 21 sets the temperature of the reaction field by the temperature adjustor 15, based on the analysis result of the reaction parameter obtained in step S3. Specifically, for example, the controller 21 sets the temperature of the reaction field to a higher temperature in the case where the chemical reaction needs to be further promoted, and sets the temperature of the reaction field to a lower temperature in the case where the chemical reaction needs to be further suppressed.

In step S5, the controller 21 controls the valve 18 to switch the flow path so that the reaction fluid mixed in the mixer 13 will flow into the reaction tube 17 as the second flow path. The reaction fluid fed from the feed tubes 111 and 112 and mixed in the mixer 13 starts a chemical reaction and flows into the reaction tube 17. Since the reaction tube 17 facilitates heat exchange as compared with the reaction tube 14, the temperature rise of the reaction fluid due to reaction heat is suppressed in the reaction tube 17. As a result of the temperature rise of the reaction fluid being suppressed, any side reaction can be suppressed in the reaction tube 17, with it being possible to cause only the desired chemical reaction to proceed. Hence, the substance produced by the desired chemical reaction can be acquired with higher purity in the reaction tube 17.

As described above, the reaction analysis system 1a includes the reaction tubes 14 and 17, the temperature measurer 16 (160 to 163), and the reaction analysis device 20. A reaction fluid obtained by mixing a plurality of reactants in the mixer 13 flows through the reaction tube 14. The reaction fluid obtained in the mixer 13 flows through the reaction tube 17. The reaction tube 17 is higher in heat exchange efficiency than the reaction tube 14. The temperature measurer 16 (160 to 163) measures the temperature distribution of the reaction fluid along the reaction tube 14. The reaction analysis device 20 specifies the reaction state of the reaction fluid based on the reaction parameter obtained from the temperature distribution measured by the temperature measurer 16 (160 to 163) and indicating the reaction state of the reaction fluid.

In this way, the reaction analysis system 1a specifies the reaction state based on the reaction parameter obtained from the temperature distribution measured in the reaction tube 14 lower in heat exchange efficiency than the reaction tube 17. The reaction analysis system 1a can therefore acquire the useful reaction parameter from the temperature distribution of the reaction fluid and specify the reaction state of the reaction fluid based on the reaction parameter with high accuracy. Moreover, since the reaction analysis system 1a includes the reaction tube 17 higher in heat exchange efficiency than the reaction tube 14, temperature rise can be prevented to suppress any side reaction. Thus, the reaction analysis system 1a can specify the reaction state of the desired chemical reaction and acquire the substance produced by the chemical reaction with higher purity.

The reaction analysis system 1a further includes the valve 18. Thus, by specifying the reaction condition under which the desired chemical reaction can be carried out based on the reaction state according to the temperature distribution of the reaction fluid along the first flow path and causing the chemical reaction under the condition, the reaction analysis system 1a can acquire the desired substance from the second flow path with high purity. Although one or more embodiments describe an example in which the reaction analysis system 1a includes the valve 18, the reaction analysis system 1a may not include the valve 18. In this case, the reaction fluid obtained in the mixer 13 flows through both the reaction tube 14 and the reaction tube 17 concurrently.

The reaction analysis system 1a may further include the temperature adjustor 15 that adjusts the temperature of the reaction tube 14 and the reaction tube 17. Thus, the reaction analysis system 1a can optimize the temperature as a reaction condition under which the desired chemical reaction can be carried out.

The reaction analysis system 1a may further include the fluid tank 151 for immersing at least one of the reaction tube 14 and the reaction tube 17 in the temperature control fluid, and the pump 19 for feeding the temperature control fluid into the fluid tank 151 from outside. Thus, the reaction analysis system 1a can adjust the heat exchange efficiency of at least one of the reaction tube 14 and the reaction tube 17 by adjusting the inflow and outflow of the temperature control fluid in the fluid tank 151.

The controller 21 in the reaction analysis device 20 acquires the measured value of the temperature distribution of the reaction fluid along the reaction tube 14 through which the reaction fluid obtained by mixing the plurality of reactants in the mixer 13 flows. The controller 21 specifies the reaction state of the reaction fluid, based on the reaction parameter obtained from the measured value of the temperature distribution and indicating the reaction state of the reaction fluid. The controller 21 controls the valve 18 to switch the connection with the discharge port of the mixer 13 from the reaction tube 14 to the reaction tube 17 higher in heat exchange efficiency than the reaction tube 14.

In this way, the reaction analysis device 20 specifies the reaction state based on the reaction parameter obtained from the temperature distribution measured in the reaction tube 14 lower in heat exchange efficiency than the reaction tube 17. The reaction analysis device 20 can therefore acquire the useful reaction parameter from the temperature distribution of the reaction fluid and specify the reaction state of the reaction fluid based on the reaction parameter with high accuracy. Moreover, the reaction analysis device 20 controls the valve 18 to switch the connection with the discharge port of the mixer 13 from the reaction tube 14 to the reaction tube 17 higher in heat exchange efficiency. Thus, the reaction analysis device 20 can suppress any side reaction and acquire the substance produced by the desired chemical reaction with higher purity.

In the reaction analysis system 1a, the temperature measurer 16 may measure not only the temperature distribution of the reaction fluid along the reaction tube 14 but also the temperature distribution of the reaction fluid along the reaction tube 17. With such a structure, not only the reaction state of the reaction fluid along the reaction tube 14 but also the reaction state of the reaction fluid along the reaction tube 17 can be specified.

### <Embodiment 2>

Embodiment 1 describes an example of the reaction analysis system 1a in which the two reaction tubes 14 and 17 are provided and the temperature measurer 16 measures the temperature distribution of the reaction fluid along the reaction tube 14, with reference to FIG. 2. Alternatively, the reaction analysis system 1 may include three or more reaction tubes different in heat conductivity. Moreover, the temperature measurer 16 may measure the temperature distribution of the reaction fluid along each of two or more reaction tubes different in heat conductivity, and specify the reaction state based on the reaction parameter for each reaction tube. Embodiment 2 describes the structure of a reaction analysis system 1b as an example. The same components as those in Embodiment 1 are given the same reference signs, and their detailed description is omitted.

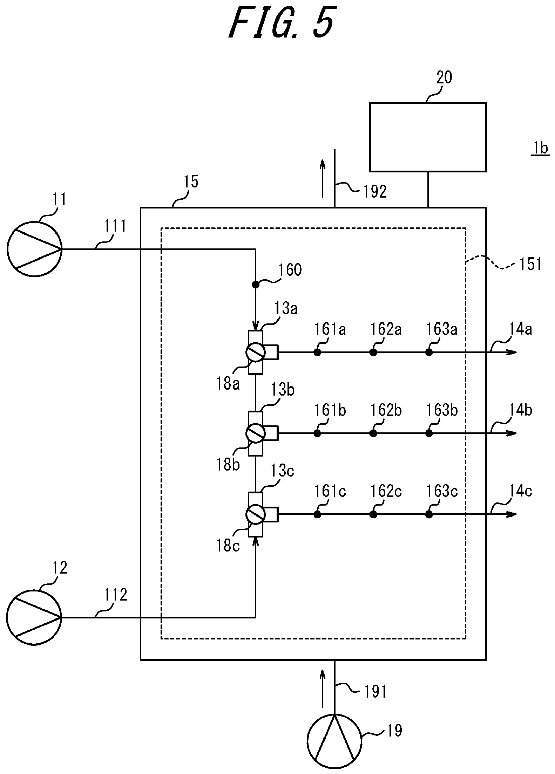

FIG. 5 is a block diagram illustrating an example of the structure of the reaction analysis system 1b according to this embodiment. The reaction analysis system 1b includes pumps 11 and 12, feed tubes 111 and 112, mixers 13 (13a, 13b, 13c), reaction tubes 14 (14a, 14b, 14c), a temperature adjustor 15, a fluid tank 151, a temperature measurer 16 (160, 161a to 163a, 161b to 163b, 161c to 163c), valves 18 (18a, 18b, 18c), a pump 19, an inflow tube 191, a discharge tube 192, and a reaction analysis device 20.

In such a structure, the reaction tubes 14a, 14b, and 14c differ in heat conductivity from each other. The following will describe the case where the reaction tube 14b as a second flow path is higher in heat conductivity than the reaction tube 14a as a first flow path and the reaction tube 14c as a third flow path is higher in heat conductivity than the reaction tube 14b as the second flow path. The temperature sensors 161a, 162a, and 163a measure the temperature distribution of the reaction fluid along the flow path of the reaction tube 14a. The temperature sensors 161b, 162b, and 163b measure the temperature distribution of the reaction fluid along the flow path of the reaction tube 14b. The temperature sensors 161c, 162c, and 163c measure the temperature distribution of the reaction fluid along the flow path of the reaction tube 14c.

The valves 18a, 18b, and 18c are each configured to have the reactant from the feed tube 111 side flow thereinto and the reactant from the feed tube 112 side flow thereinto. Hence, the mixers 13a to 13c each have the same function as the mixer 13 in the reaction analysis system 1a according to Embodiment 1. The valves 18a, 18b, and 18c correspond to the reaction tubes 14a, 14b, and 14c respectively, and are opened and closed to switch the flow path through which the reaction fluid flows among the reaction tubes 14a, 14b, and 14c. When one of the valves 18a, 18b, and 18c is opened on the corresponding one of the reaction tube 14a side, the reaction tube 14b side, and the reaction tube 14c side, the reaction fluid flows into the reaction tube to which the valve is connected. For example, when the valves 18a and 18b are closed respectively on the reaction tube 14a side and the reaction tube 14b side and the valve 18c is opened on the reaction tube 14c side, the reactants from the feed tubes 111 and 112 are mixed in the mixer 13c and the resultant reaction fluid flows into the reaction tube 14c. For example, when the valves 18a and 18c are closed respectively on the reaction tube 14a side and the reaction tube 14c side and the valve 18b is opened on the reaction tube 14b side, the reaction fluid flows from the mixer 13b into the reaction tube 14b. For example, when the valves 18b and 18c are closed respectively on the reaction tube 14b side and the reaction tube 14c side and the valve 18a is opened on the reaction tube 14a side, the reaction fluid flows from the mixer 13a into the reaction tube 14a.

By controlling the opening and closing of the valves 18a, 18b, and 18c in this way, the reaction analysis device 20 can cause the reaction fluid to flow into the desired reaction tube 14 (14a, 14b, 14c). Since the temperature measurer 16 can measure the temperature distribution of the reaction fluid along the flow path of each reaction tube 14 (14a, 14b, 14c) as mentioned above, the reaction analysis device 20 can specify the reaction state of the reaction fluid for each reaction tube.

The reaction analysis device 20 may select, depending on the types of the reactants subjected to the chemical reaction, a flow path in which the temperature rises to such an extent necessary for the desired chemical reaction to proceed but does not rise to such an extent where the side reaction is dominant as compared with the desired chemical reaction. In this case, the reaction analysis device 20 may further control the pump 19 to change the flow rate of the temperature control fluid, and adjust the heat conductivity of the reaction field to adjust the temperature rise width in the selected flow path. Since the reaction analysis system 1b includes the temperature sensors 161 (161a, 161b, 161c) to 163 (163a, 163b, 163c) for all flow paths, the side reaction can be suppressed during synthesis, and also the reaction parameter can be sensed inline from the measured temperature distribution. In other words, the reaction analysis system 1b can specify the reaction state of the desired chemical reaction and acquire the substance produced by the chemical reaction with high purity, using one reaction tube.

As described above, the reaction analysis system 1b further includes the reaction tube 14c that is higher in heat exchange efficiency than the reaction tube 14b and through which the reaction fluid obtained in the mixer 13 (13a, 13b, 13c) flows. The reaction analysis system 1b further includes the valves 18 (18a, 18b, 18c) that switch the connection with the discharge port of the mixer 13 among the reaction tubes 14a, 14b, and 14c. The temperature measurer 16 measures the temperature distribution of the reaction fluid not only along the reaction tube 14a but also along each of the reaction tubes 14b and 14c. The reaction analysis device 20 specifies the reaction state of the reaction fluid not only in the reaction tube 14a but also in each of the reaction tubes 14b and 14c, based on the reaction parameter obtained from the temperature distribution along the corresponding one of the reaction tubes 14a, 14b, and 14c measured by the temperature measurer 16. Thus, the reaction analysis system can select the optimum flow path from among the reaction tubes 14a, 14b, and 14c, and cause the chemical reaction in the flow path. For example, by selecting a flow path whose heat exchange efficiency is low enough to cause no side reaction and high enough to allow the reaction state to be specified, the reaction analysis system can specify the reaction state of the desired chemical reaction and acquire the substance produced by the chemical reaction with high purity.

Exemplary embodiments of the present disclosure are as follows:
[1] A reaction analysis system comprising: a first flow path through which a reaction fluid obtained by mixing a plurality of reactants in a mixer flows; a second flow path through which the reaction fluid obtained in the mixer flows and that is higher in heat exchange efficiency than the first flow path; a temperature measurer configured to measure a temperature distribution of the reaction fluid along the first flow path; and a reaction analysis device configured to specify a reaction state of the reaction fluid, based on a reaction parameter obtained from the temperature distribution measured by the temperature measurer and indicating the reaction state of the reaction fluid.
[2] The reaction analysis system according to [1], further comprising a temperature adjustor configured to adjust a temperature of each of the first flow path and the second flow path.
[3] The reaction analysis system according to [1] or [2], further comprising: a fluid tank configured to immerse at least one of the first flow path and the second flow path in a temperature control fluid; and a pump configured to feed the temperature control fluid into the fluid tank from outside.
[4] The reaction analysis system according to any one of [1] to [3], wherein the temperature measurer is configured to further measure a temperature distribution of the reaction fluid along the second flow path.
[5] The reaction analysis system according to any one of [1] to [4], further comprising a valve configured to switch connection with a discharge port of the mixer between the first flow path and the second flow path.
[6] The reaction analysis system according to any one of [1] to [3], further comprising: a third flow path through which the reaction fluid obtained in the mixer flows and that is higher in heat exchange efficiency than the second flow path; and a valve configured to switch connection with a discharge port of the mixer among the first flow path, the second flow path, and the third flow path, wherein the temperature measurer is configured to further measure a temperature distribution of the reaction fluid along each of the second flow path and the third flow path, and the reaction analysis device is configured to further specify a reaction state of the reaction fluid in each of the second flow path and the third flow path, based on a reaction parameter obtained from the temperature distribution along a corresponding one of the second flow path and the third flow path measured by the temperature measurer.
[7] A reaction analysis device comprising a controller configured to: acquire a measured value of a temperature distribution of a reaction fluid obtained by mixing a plurality of reactants in a mixer, along a first flow path through which the reaction fluid flows; specify a reaction state of the reaction fluid, based on a reaction parameter obtained from the measured value of the temperature distribution and indicating the reaction state of the reaction fluid; and control a valve to switch connection with a discharge port of the mixer from the first flow path to a second flow path higher in heat exchange efficiency than the first flow path.
[8] A reaction analysis method carried out by a controller in a reaction analysis device, the reaction analysis method comprising: acquiring a measured value of a temperature distribution of a reaction fluid obtained by mixing a plurality of reactants in a mixer, along a first flow path through which the reaction fluid flows; specifying a reaction state of the reaction fluid, based on a reaction parameter obtained from the measured value of the temperature distribution and indicating the reaction state of the reaction fluid; and controlling a valve to switch connection with a discharge port of the mixer from the first flow path to a second flow path higher in heat exchange efficiency than the first flow path.

The present disclosure is not limited to the foregoing embodiments. For example, a plurality of blocks in any of the block diagrams may be combined, or a single block in any of the block diagrams may be divided. A plurality of steps in the flowchart may be, instead of being performed in chronological order according to the description, performed in parallel or in different order depending on the processing capacity of the device that performs each step or depending on the need. Other modifications are also possible without departing from the scope of the present disclosure. Although the disclosure has been described with respect to only a limited number of embodiments, those skilled in the art, having benefit of this disclosure, will appreciate that various other embodiments may be devised without departing from the scope of the present invention as determined by the claims. Accordingly, the scope of the invention should be limited only by the attached claims.

## Claims

1. A reaction analysis system (1; 1a; 1b) comprising:
a first flow path through which a reaction fluid, obtained by mixing reactants in a mixer (13), flows;
a second flow path through which the reaction fluid flows and that has higher heat exchange efficiency than the first flow path;
a temperature measurer (16) configured to measure a temperature distribution of the reaction fluid along the first flow path; and
a reaction analysis device (20) configured to specify a reaction state of the reaction fluid based on a reaction parameter, wherein the reaction parameter is obtained from the measured temperature distribution and indicates the reaction state of the reaction fluid.

2. The reaction analysis system (1; 1a; 1b) according to claim 1, further comprising:
a temperature adjustor (15) configured to adjust a temperature of each of the first flow path and the second flow path.

3. The reaction analysis system (1; 1a; 1b) according to claim 1 or 2, further comprising:
a fluid tank (151) including a temperature control fluid in which one or both of the first flow path and the second flow path immerse; and
a pump (19) configured to feed the temperature control fluid into the fluid tank.

4. The reaction analysis system (1; 1a; 1b) according to any one of claims 1 to 3, wherein the temperature measurer (16) is further configured to measure a temperature distribution of the reaction fluid along the second flow path.

5. The reaction analysis system (1; 1a; 1b) according to any one of claims 1 to 4, further comprising:
a valve (18) configured to switch connection with a discharge port of the mixer (13) between the first flow path and the second flow path.

6. The reaction analysis system (1b) according to any one of claims 1 to 3, further comprising:
a third flow path through which the reaction fluid flows and that has higher heat exchange efficiency than the second flow path; and
a valve (18a, 18b, 18c) configured to switch connection with a discharge port of the mixer among the first flow path, the second flow path, and the third flow path, wherein
the temperature measurer (16) is further configured to measure a temperature distribution of the reaction fluid along each of the second flow path and the third flow path, and
the reaction analysis device (20) is further configured to specify a reaction state of the reaction fluid in each of the second flow path and the third flow path based on a reaction parameter obtained from the measured temperature distribution along a corresponding one of the second flow path and the third flow path.

7. A reaction analysis device (20) comprising:
a controller (21) configured to:
acquire a measured value of a temperature distribution of a reaction fluid along a first flow path through which the reaction fluid flows, wherein the reaction fluid is obtained by mixing reactants in a mixer (13);
specify a reaction state of the reaction fluid based on a reaction parameter that is obtained from the measured value and that indicates the reaction state of the reaction fluid; and
control a valve (18) to switch connection with a discharge port of the mixer (13) from the first flow path to a second flow path, wherein heat exchange efficiency of the second flow path is higher than heat exchange efficiency of the first flow path.

8. A reaction analysis method carried out by a controller (21) in a reaction analysis device (20), the reaction analysis method comprising:
acquiring a measured value of a temperature distribution of a reaction fluid along a first flow path through which the reaction fluid flows, wherein the reaction fluid is obtained by mixing reactants in a mixer (13);
specifying a reaction state of the reaction fluid based on a reaction parameter, wherein the reaction parameter is obtained from the measured value and indicates the reaction state of the reaction fluid; and
controlling a valve (18) to switch connection with a discharge port of the mixer from the first flow path to a second flow path, wherein heat exchange efficiency of the second flow path is higher than heat exchange efficiency of the first flow path.
